# EUROPÄISCHE PATENTSCHRIFT

(11) **EP 1 057 582 B1**
(45) Veröffentlichungstag und Bekanntmachung des Hinweises auf die Patenterteilung: **11.09.2002**
(21) Anmeldenummer: 99109993.8
(22) Anmeldetag: 21.05.1999
(51) Int. Cl.: B23Q 1/01

(54) **Bearbeitungsmaschine, insbesondere Bohr- und/oder Fräsmaschine**
Processing machines, in particular boring and/or milling machine
Machines d'usinage, en particulier machine foreuse et/ou fraiseuse

(43) Veröffentlichungstag der Anmeldung: 06.12.2000
(73) Patentinhaber: Maschinenfabrik Berthold Hermle Aktiengesellschaft, D-78559 Gosheim (DE)
(72) Erfinder: Braun, Hans-Dieter, 78665 Frittlingen (DE)
(74) Vertreter: Vetter, Hans, Dipl.-Phys. Dr.

(56) Entgegenhaltungen:
- EP-A- 0 642 867
- EP-A- 0 816 012
- US-A- 4 621 407
- US-A- 5 439 431
- US-A- 5 678 291

## Beschreibung

Die Erfindung betrifft eine Bearbeitungsmaschine, insbesondere Bohr- und/oder Fräsmaschine, mit einem Maschinenständer, auf dem ein an Führungsschienen geführter, motorisch angetriebener erster Schlitten in einer ersten horizontalen Bewegungsrichtung bewegbar ist, wobei ein motorisch angetriebener zweiter Schlitten in einer zweiten horizontalen Bewegungsrichtung senkrecht zur ersten Bewegungsrichtung am ersten Schlitten geführt ist, mit einem am zweiten Schlitten angeordneten, eine Antriebsvorrichtung für wenigstens ein rotierendes Werkzeug aufweisenden Bearbeitungskopf und mit einem Bearbeitungstisch in einem Bearbeitungsbereich unterhalb des Bearbeitungskopfes, der an vertikalen Führungsschienen motorisch verschiebbar geführt ist zur Durchführung von vertikalen Bearbeitungsbewegungen bei der Bearbeitung von Werkstücken durch den Bearbeitungskopf.

Eine derartige aus der DE 14 77 580 A (nächstkommender Stand der Technik) bekannte Bearbeitungsmaschine besitzt einen Maschinenständer, der aus zwei über vier vertikale Stangen miteinander verbundenen Platten besteht. Die Stangen dienen dabei als vertikale Führungsschienen für einen Bearbeitungstisch, während die obere Platte als Schlittenführung dient. Der Bearbeitungsbereich ist nach allen vier Seiten hin offen, so daß eine definierte Abführung von bei der Bearbeitung anfallendem Materialabtrag sowie Kühl- und Schmiermitteln nicht möglich ist. Darüber hinaus ist die bekannte Stangenkonstruktion nicht für präzise Bearbeitungsvorgänge geeignet.

Aus der nicht vorveröffentlichten europäischen Patentanmeldung 97122348.2 ist ebenfalls eine Bearbeitungsmaschine gemäß dem Oberbegriff des Anspruchs 1 bekannt. Bei dieser Bearbeitungsmaschine sind vertikale Führungsschienen für den Bearbeitungstisch an einem zwei Seltenwandungen des Maschinenständers verbindenden Ständerbereich angeordnet. Dies hat zum einen den Nachteil, daß infolge dieser Führungsschienen ein dahinter angeordnetes Werkzeugmagazin schwer zugänglich ist, und zum anderen muß bei dieser Lösung konstruktiv bedingt ein Abführungskanal für anfallenden Materialabtrag sowie Kühl- und Schmiermittel senkrecht zu den Seitenwandungen nach einer Seite der Maschine hin verlaufen, was einer schmalen Bauweise entgegensteht und eine seitliche Aneinanderreihung derartiger Maschinen verbietet.

Eine Aufgabe der vorliegenden Erfindung besteht darin, eine Bearbeitungsmaschine der eingangs genannten Gattung so zu verbessern, daß eine schmalere Bauweise und eine bessere Zugänglichkeit und Anordnung eines Werkzeugmagazins erreicht werden.

Diese Aufgabe wird erfindungsgemäß dadurch gelöst, daß der Bearbeitungsbereich durch zwei Seitenwandungen des Maschinenständers zumindest teilweise seitlich begrenzt ist, die parallel zur ersten horizontalen Bewegungsrichtung verlaufen, und daß die vertikalen Führungsschienen für den Bearbeitungstisch an einer der Seitenwandungen angeordnet sind.

Durch die Anordnung der vertikalen Führungsschienen für den Bearbeitungstisch an einer der beiden Seitenwandungen ist die zum Bearbeitungsbereich weisende Wandung des die beiden Seitenwandungen verbindenden Ständerbereichs frei für konstruktive Maßnahmen, so daß in einfacher Weise ein Zugang zu einem dahinter angeordneten Werkzeugmagazin geschaffen werden kann. Ein weiterer Vorteil besteht darin, daß der Bearbeitungsbereich unterhalb des Bearbeitungstisches zu einem schmalen Abführungsbereich hin verjüngt werden kann, der parallel zu derjenigen Seitenwand verläuft, an der die vertikalen Führungsschienen angeordnet sind. Dies ermöglicht einen parallel zu diesen beiden Seitenwandungen bzw. zwischen diesen verlaufenden Abführungskanal für anfallenden Materialabtrag sowie Kühlund Schmiermittel, der nach hinten zur Rückseite der Maschine verläuft. Dies ermöglicht eine sehr schmale Bauweise und eine Aneinanderreihung mehrerer derartiger schmaler Bearbeitungsmaschinen. Schließlich besteht ein wesentlicher Vorteil noch darin, daß nach dem Bearbeiten der Montagestellen für die vertikalen Führungsschienen eine einfache und exakte Nachjustierung der Längs-Führungsschienen für den ersten Schlitten, beispielsweise durch Unterlagen, möglich ist. Dies kann beispielsweise dadurch erfolgen, daß die Maschine auf diejenige Seitenwand gelegt wird, die zur Aufnahme der vertikalen Führungsschienen vorgesehen ist.

Durch die in den Unteransprüchen aufgeführten Maßnahmen sind vorteilhafte Weiterbildungen und Verbesserungen der im Anspruch 1 angegebenen Bearbeitungsmaschine möglich.

Zwei horizontale Führungsschienen für den ersten Schlitten verlaufen wenigstens teilweise auf den Seitenwandungen und parallel zu diesen, wodurch eine mechanisch sehr stabile und hochpräzise Schlittenführung für den ersten Schlitten erreicht wird.

Eine dieser horizontalen Führungsschienen ist in vorteilhafter Weise länger als die andere ausgebildet, und der erste Schlitten besitzt eine 3-Punkt-Führung, wobei zwei voneinander beabstandete Führungselemente an der längeren und ein Führungselement an der kürzeren Führungsschiene geführt sind. Hierdurch bleibt der Bereich zwischen den beiden Führungsschienen frei, so daß ein dort angeordnetes Werkzeugmagazin leicht zugänglich bzw. erreichbar ist. Eine konstruktiv besonders günstige Anordnung ergibt sich dabei dadurch, daß der Maschinenständer in Verlängerung der die längere Führungsschiene tragenden Seitenwandung eine asymmetrische hintere Erweiterung besitzt, die den hinteren Bereich dieser Führungsschiene trägt.

Vorzugsweise trägt die insbesondere seitlich der Mittellinie zwischen den beiden Führungsschienen für den ersten Schlitten angeordnete asymmetrische Erweiterung des Maschinenständers auch einen Spindelantrieb für den ersten Schlitten, so daß auch in dieser Hinsicht der das Werkzeugmagazin enthaltende mittlere Bereich des Maschinenständers oben leicht zugänglich ist.

Die vertikalen Führungsschienen für den Bearbeitungstisch sind vorzugsweise an der die längere Führungsschiene für den ersten Schlitten tragenden Seitenwandung angeordnet, was zusätzlich zur Erhöhung der Stabilität und Verwindungssteifigkeit beiträgt.

Der Bearbeitungsbereich unterhalb des Bearbeitungstisches besitzt in vorteilhafter Weise eine Schrägfläche, die sich von der nicht mit der vertikalen Führungsschiene versehenen Seitenwandung aus schräg nach unten zur gegenüberliegenden Seitenwandung hin erstreckt, wobei diese Schrägfläche als Zuführungsfläche für bei der Bearbeitung anfallenden Materialabtrag sowie Kühl- und Schmiermittel zu einem unterhalb des Bearbeitungsbereichs angeordneten Abführungskanal ausgebildet ist, der sich vorzugsweise zwischen den Seitenwandungen zum hinteren Endbereich des Maschinenständers erstreckt. Der Materialabtrag bzw. die anfallenden Späne können dadurch in idealer Weise nach hinten abgeführt werden, so daß die beiden Seitenwandungen frei bleiben, wodurch eine enge Aneinanderreihung derartiger Bearbeitungsmaschinen möglich ist. Der nach hinten verlaufende Abführungskanal trägt auch zu einer sehr schmalen Bauweise der Maschine bei.

Der Bearbeitungstisch besitzt unterhalb einer Bearbeitungsplatte eine an die des auf einer Seite durch die Schrägfläche begrenzten unteren Teils des Bearbeitungsbereichs angepaßte Gestalt, so daß trotz Schrägfläche weit abgesenkte Bearbeitungspositionen und eine platzsparende Anordnung realisiert werden können.

Ein ständerfester Antriebsmotor für den Bearbeitungstisch greift wenigstens in der untersten Stellung desselben in einen Hohlraum dieses Bearbeitungstisches ein, wobei der Antriebsmotor vorzugsweise eine Hubspindel für den Bearbeitungstisch antreibt. Auch dies trägt zu einer kompakten und platzsparenden Anordnung bei.

In vorteilhafter Weise ist ein den Bearbeitungsbereich nach einer dritten, von einer Bedienungsperson abgewandten Seite hin begrenzender, die beiden Seitenwandungen verbindender Ständerbereich vorgesehen, der vorzugsweise ein Werkzeugmagazin enthält. Hierzu besitzt der die Seitenwandungen verbindende Ständerbereich eine Zugriffsöffnung zum Werkzeugmagazin vom Bearbeitungsbereich aus. Infolge der guten Zugänglichkeit auch von hinten kann dieses Werkzeugmagazin mittig angeordnet werden, was ebenfalls zu einer schmalen Bauweise der Bearbeitungsmaschine beiträgt.

Infolge der guten Zugänglichkeit kann dieses Werkzeugmagazin auch als Trommelmagazin ausgebildet sein.

Die vertikalen Führungsschienen für den Bearbeitungstisch sind vorzugsweise versenkt in der Seitenwandung angeordnet, insbesondere derart, daß auch der Bearbeitungstisch in einen vertikalen Führungsschacht in dieser Seitenwandung eingreift.

Ein Ausführungsbeispiel der Erfindung ist in der Zeichnung dargestellt und in der nachfolgenden Beschreibung näher erläutert. Es zeigen:
- Fig. 1: eine Seitenansicht einer Bearbeitungsmaschine als Ausführungsbeispiel der Erfindung,
- Fig. 2: diese Bearbeitungsmaschine in einer Vorderansicht,
- Fig. 3: den Maschinenständer dieser Bearbeitungsmaschine in einer Vertikalschnittdarstellung im Bereich des Bearbeitungstisches und
- Fig. 4: diese Bearbeitungsmaschine in der Draufsicht.

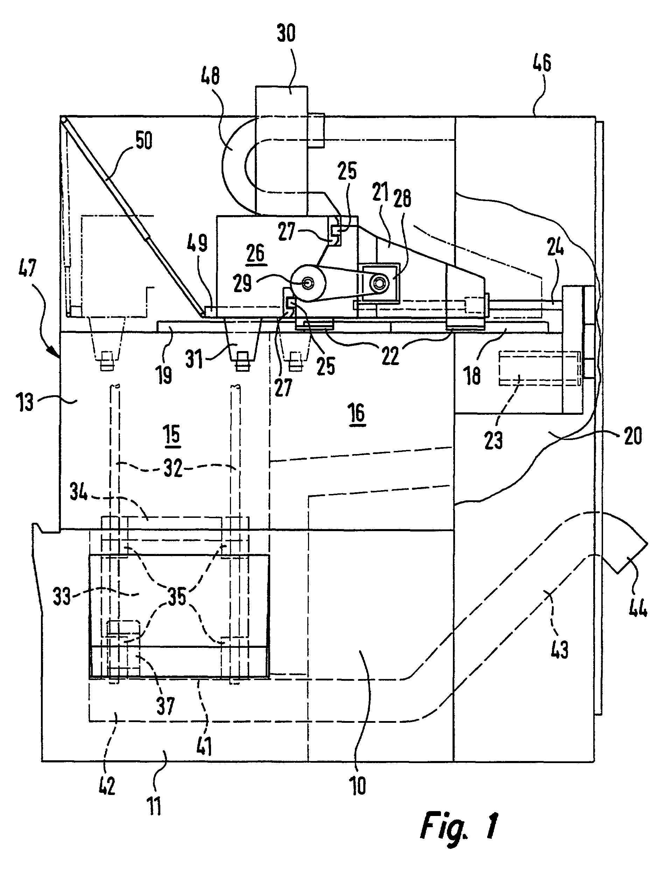

Die in den Fig. 1 bis 4 dargestellte Bearbeitungsmaschine kann als Bohrmaschine, Schleifmaschine oder Fräsmaschine oder als kombiniertes Bearbeitungszentrum ausgebildet sein.

Ein ein Maschinenbett bildender Maschinenständer 10 besitzt einen unteren Basisbereich 11, von dem aus sich an zwei gegenüberliegenden Seiten zwei Seitenwandungen 12, 13 nach oben erstrecken. Diese Seitenwandungen 12, 13 begrenzen zusammen mit einer sie verbindenden Querwandung 14 einen Bearbeitungsbereich 15 der Maschine. Ein die beiden Seitenwandungen 12, 13 an der vom Bearbeitungsbereich 15 abgewandten Seite der Querwandung 14 verbindender Ständerbereich 16 enthält ein als Trommelmagazin ausgebildetes Werkzeugmagazin 17, das mittig in diesem Ständerbereich 16, das heißt im wesentlichen mittig zwischen den beiden Seitenwandungen 12, 13, angeordnet ist.

Auf den beiden Seitenwandungen 12, 13 sind zwei parallele Führungsschienen 18, 19 in der Längsrichtung dieser Seitenwandungen 12, 13 bzw. in der Längsrichtung des Maschinenständers 10 fixiert. Die Führungsschiene 18 ist wesentlich länger als die Führungsschiene 19 und erstreckt sich im hinteren Bereich der Maschine auf einer den Maschinenständer 10 asymmetrisch nach hinten verlängernden Erweiterung 20, die im wesentlichen eine Verlängerung der Seitenwandung 12 darstellt. Diese Erweiterung 20 erstreckt sich von vorne gesehen längs einer Mittellängslinie der Bearbeitungsmaschine.

Ein Längsschlitten 21 ist mittels dreier Führungselemente 22 an den beiden Führungsschienen 18, 19 horizontal längsverschiebbar geführt. Hierdurch wird eine stabile 3-Punkt-Auflage erreicht. Dabei stützt sich dieser Längsschlitten 21 über zwei dieser Führungselemente 22, die voneinander beabstandet angeordnet sind, an der längeren Führungsschiene 18 ab. Insgesamt hat dieser Längsschlitten 21 daher eine von oben gesehen im wesentlichen dreieckförmige Gestalt. Ein am hinteren Ende der Erweiterung 20 angeordneter motorischer Antrieb 23 treibt eine Längsspindel 24 an, durch die der Längsschlitten 21 in der Längsrichtung motorisch verfahrbar ist.

Der Längsschlitten 21 weist an seiner dem Bearbeitungsbereich 15 zugewandten Vorderseite zwei übereinander angeordnete und in der Längsrichtung der Führungsschienen 18, 19 zueinander versetzte Querschienen 25 auf, an denen ein Querschlitten 26 mittels Führungselementen 27 quer zur Bewegungsrichtung des Längsschlittens 21 horizontal verschiebbar geführt ist. Infolge der Versetzung der Führungselemente 27 in der Längsrichtung der Maschine entsteht eine schräge Verbindungsfläche zwischen den beiden Schlitten 21, 26, und der Querschlitten 26 übergreift den Längsschlitten 21 im Versetzungsbereich der Querschienen 25. Der motorische Antrieb des Querschlittens 26 erfolgt über einen am Längsschlitten angeordneten Antriebsmotor 28, der eine Querspindel 29 antreibt.

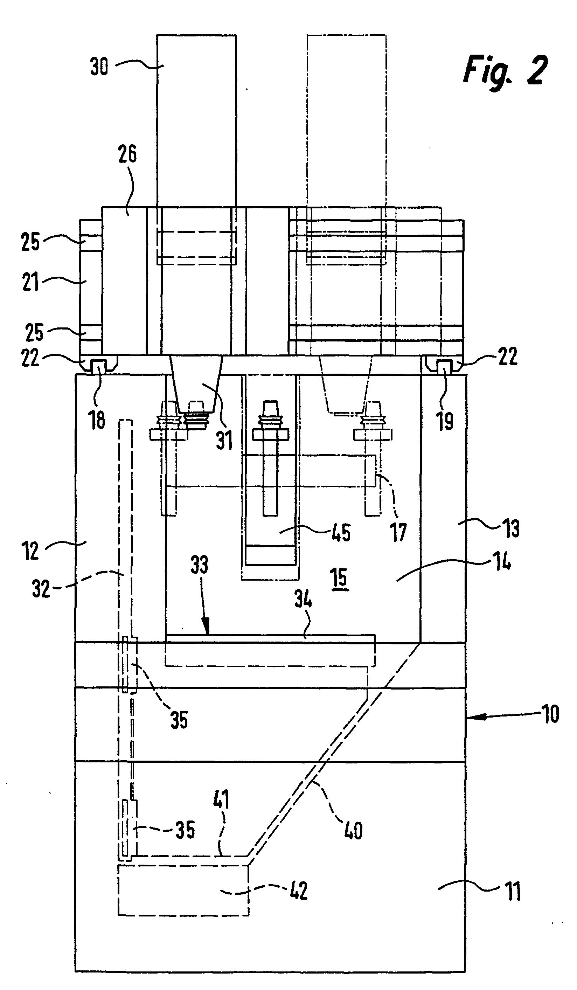

Der Querschlitten 26 weist einen integrierten Bearbeitungskopf auf, der vertikal nicht verschiebbar im bzw. am Querschlitten 26 angeordnet ist. Ein Antriebsmotor 30 für den Bearbeitungskopf ragt oben aus dem Querschlitten 26 heraus, und eine Werkzeugspindel 31 ist unterhalb des Querschlittens 26 an diesem angeordnet und dient zur Aufnahme von Werkzeugen. Sie wird durch eine nicht dargestellte Anordnung im Inneren des Querschlittens 26 vom Antriebsmotor 30 angetrieben. In Fig. 1 sind zwei zusätzliche Längspositionen des Querschlittens 26 und der werkzeugspindel 31 strichpunktiert dargestellt, während in Fig. 2 eine zweite Querposition strichpunktiert dargestellt ist.

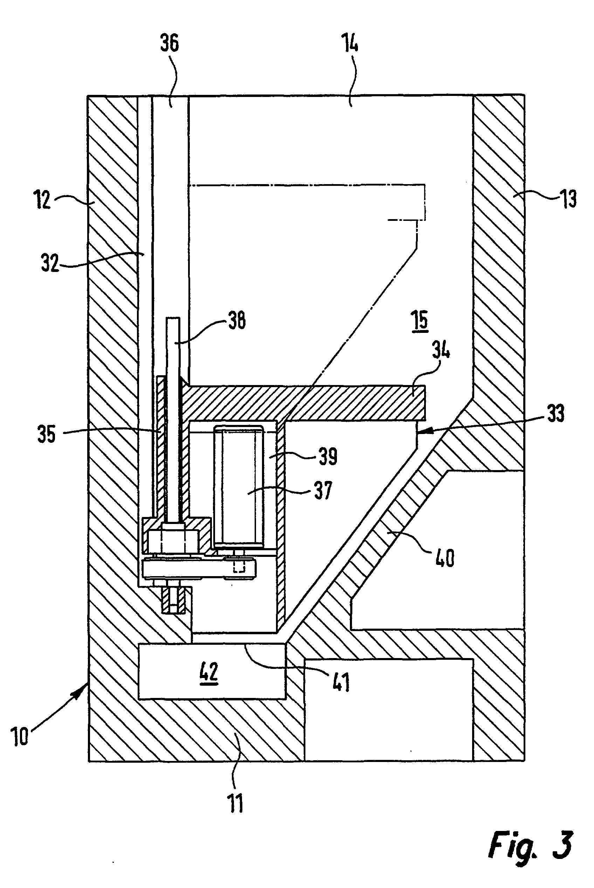

An der linken, mit der längeren horizontalen Führungsschiene 18 versehenen Seitenwandung 12 sind im Bearbeitungsbereich 15 zwei vertikale Führungsschienen 32 angeordnet, an denen ein Werkstücktisch bzw. Bearbeitungstisch 33 mit horizontaler Werkstückaufnahmeplatte 34 mittels Führungselementen 35 vertikal verschiebbar geführt ist. Prinzipiell könnten die vertikalen Führungsschienen 32 jedoch auch an der gegenüberliegenden Seitenwandung 13 angeordnet sein. Die beiden Führungsschienen 32 sind versenkt in der Seitenwandung 12 angeordnet, so daß der Bearbeitungstisch 33 ebenfalls in einen Vertikalkanal 36 dieser Seitenwandung 12 eingreift. Zur motorischen Bewegung dient eine von einem Antriebsmotor 37 angetriebene Vertikalspindel bzw. Hubspindel 38, die mittig zwischen den vertikalen Führungsschienen 32 angeordnet ist. Der ortsfest mit dem Maschinenständer 10 verbundene Antriebsmotor 37 greift in der in Fig. 3 dargestellten untersten Position des Bearbeitungstisches 33 von unten her in einen Hohlraum 39 desselben ein. In einer alternativen Ausgestaltung könnte der Antriebsmotor 37 auch außen am Maschinenbett bzw. Maschinenständer 10 angebracht sein.

Unterhalb der Werkstückaufnahmeplatte 34 verläuft von der rechten Seitenwandung 13 aus eine Schrägwandung 40 nach unten zur Seitenwandung 12 hin, so daß sich der Bearbeitungsbereich unterhalb der Werkstückaufnahmeplatte 34 bis zu einem nach unten offenen Schlitz 41 verjüngt. Unterhalb dieses Schlitzes 41 ist ein Abführungskanal 42 im unteren Basisbereich 11 angeordnet, der im wesentlichen parallel zu den Seitenwandungen 12, 13 zum hinteren Ende des Maschinenständers 10 verläuft, wie dies in Fig. 1 dargestellt ist. Im hinteren Bereich besitzt dieser Abführungskanal 42 nach einem Anstiegsbereich 43 einen Auswurf 44. Bei der Bearbeitung anfallende Späne und anderer Materialabtrag gleiten mittels der Schrägwandung 40 in den Abführungskanal 42 und werden dort mittels einer nicht dargestellten Fördereinrichtung, wie einem Förderband, zum Auswurf 44 transportiert. Dort kann ein Wagen oder Behälter zur Aufnahme der Späne und dergleichen angeordnet werden. Ebenfalls über die Schrägwandung 40 zum Abführungskanal 42 fließende Kühl- und Schmiermittel werden aus dem Abführungskanal 42 in nicht näher dargestellter Weise abgelassen bzw. abgepumpt und gegebenenfalls in den Kreislauf rückgeführt.

Zur Bearbeitung eines nicht dargestellten, auf dem Bearbeitungstisch 33 aufgespannten Werkstücks werden die horizontalen Bewegungen (X-Achse und Y-Achse) durch die beiden Schlitten 21, 26 ausgeführt, während die Vertikalbewegung (Z-Achse) durch entsprechende Steuerung des Bearbeitungstisches 33 realisiert wird. Dabei entstehen unabhängig von der jeweiligen Position der Werkzeugspindel 31 und des Bearbeitungstisches 33 keine überstehenden Bereiche von Schlitten oder dergleichen, die die Stabilität und Bearbeitungsgenauigkeit beeinträchtigen könnten.

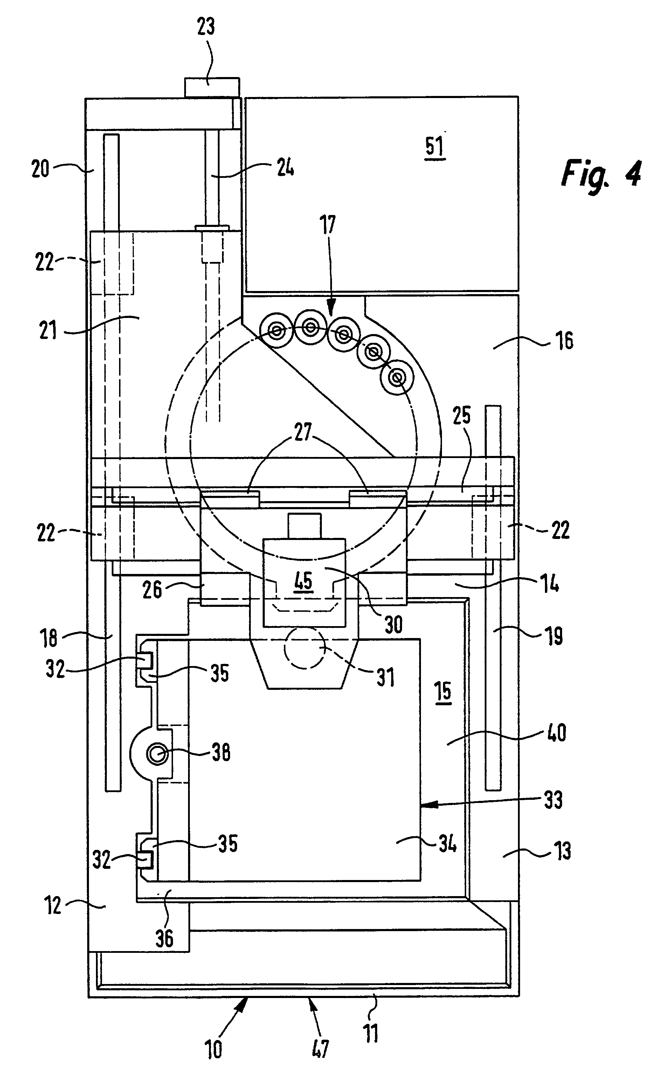

Gemäß den Fig. 2 und 4 ist das Werkzeugmagazin 10 als Teil einer Werkzeugwechseleinrichtung im die beiden Seitenwandungen 12, 13 miteinander verbindenden Ständerbereich 16 angeordnet. Zwischen dem Bearbeitungsbereich 15 und einem entsprechenden Hohlraum für das Werkzeugmagazin 17 ist gemäß Fig. 2 eine nach oben hin offene Durchgangsöffnung 45 in der Querwandung 14 vorgesehen. Hierdurch kann mittels des Schlittenantriebs die Werkzeugspindel 31 in diese Durchgangsöffnung 45 hineinbewegt werden, um das bisherige Werkzeug im Werkzeugmagazin 17 abzulegen und nach entsprechender Rotation dieses Werkzeugmagazins 17 ein neues gewünschtes Werkzeug aufzunehmen.

Der Ständerbereich 16 ist an seinem hinteren Ende offen, um ein Auswechseln von Werkzeugen zu erleichtern. Diese Öffnung kann selbstverständlich auch durch eine Klappe, Tür oder dergleichen abgedeckt sein.

Gemäß Fig. 1 ist die Bearbeitungsmaschine in einem Gehäuse 46 angeordnet, das in nicht näher dargestellter Weise von der Bearbeitungsseite 47 her einen Zugang zum Bearbeitungsbereich 15 dadurch ermöglicht, daß Schiebe-, Klappoder Rolltüren vorgesehen sind. Im oberen Bereich des Gehäuses 46 verläuft ein flexibler Kabelkanal 48 von der Horizontalschlittenanordnung aus nach hinten, um die Stromzuführung zu der Schlittenanordnung zu gewährleisten.

Von einer Befestigungsleiste 49 aus, die am vorderen, unteren Bereich der Horizontalschlittenanordnung angeordnet ist, verläuft eine teleskopartig in ihrer Gestalt veränderbare Abdeckung 50 zum vorderen,oberen Ende des Gehäuses 46. Bei der Bewegung des Querschlittens 26 nach der einen Seite verschmälert sich dort die Abdeckung 50 und verbreitert sich an der gegenüberliegenden Seite durch Ineinander- oder Aufeinanderschieben von Lamellen oder mittels auf- und abrollbaren Flächenelementen. Bei einer Bewegung des Längsschlittens 21 verändert sich gemäß Fig. 1 der Abstand von der Befestigungsleiste 49 zur vorderen, oberen Ecke des Gehäuses 46, wobei sich die Abdeckung 50 entsprechend anpaßt.

Durch die asymmetrische hintere Erweiterung 20 am Maschinenständer 10 bzw. am Ständerbereich 16 entsteht ein quaderförmiger Hohlraum seitlich neben dieser Erweiterung 20. In diesem Hohlraum ist ein Schaltschrank 51 angeordnet, der die Maschinensteuerung oder wenigstens Teile der Maschinensteuerung enthalten kann, wobei hier noch zusätzlich Unterbringungsmöglichkeiten für Ersatzteile und Zubehör bestehen.

## Patentansprüche

1. Bearbeitungsmaschine, insbesondere Bohr- und/oder Fräsmaschine, mit einem Maschinenständer (10), auf dem ein an Führungsschienen (18, 19) geführter, motorisch angetriebener erster Schlitten (21) in einer ersten horizontalen Bewegungsrichtung bewegbar ist, wobei ein motorisch angetriebener zweiter Schlitten (26) in einer zweiten horizontalen Bewegungsrichtung senkrecht zur ersten Bewegungsrichtung am ersten Schlitten (21) geführt ist, mit einem am zweiten Schlitten (26) angeordneten, eine Antriebsvorrichtung (30) für wenigstens ein rotierendes Werkzeug aufweisenden Bearbeitungskopf (31) und mit einem Bearbeitungstisch (33) in einem Bearbeitungsbereich (15) unterhalb des Bearbeitungskopfes (31), der an vertikalen Führungsschienen (32) motorisch verschiebbar geführt ist zur Durchführung von vertikalen Bearbeitungsbewegungen bei der Bearbeitung von Werkstücken durch den Bearbeitungskopf (31), **dadurch gekennzeichnet, daß** der Bearbeitungsbereich (15) durch zwei Seitenwandungen (12, 13) des Maschinenständers (10) zumindest teilweise seitlich begrenzt ist, die parallel zur ersten horizontalen Bewegungsrichtung verlaufen, und daß die vertikalen Führungsschienen (32) für den Bearbeitungstisch (33) an einer der Seitenwandungen (12) angeordnet sind.

2. Bearbeitungsmaschine nach Anspruch 1, **dadurch gekennzeichnet, daß** zwei horizontale Führungsschienen (18, 19) für den ersten Schlitten (21) wenigstens teilweise auf den Seitenwandungen (12, 13) und parallel zu diesen verlaufen.

3. Bearbeitungsmaschine nach Anspruch 2, **dadurch gekennzeichnet, daß** eine der horizontalen Führungsschienen (18) länger als die andere (19) ausgebildet ist und der erste Schlitten (21) eine 3-Punkt-Führung besitzt, wobei zwei voneinander beabstandete Führungselemente (22) an der längeren (18) und ein Führungselement (22) an der kürzeren Führungsschiene (19) geführt sind.

4. Bearbeitungsmaschine nach Anspruch 2 oder 3, **dadurch gekennzeichnet, daß** der Maschinenständer (10) in Verlängerung der die längere Führungsschiene (18) tragenden Seitenwandung (12) eine asymmetrische hintere Erweiterung (20) besitzt, die den hinteren Bereich dieser Führungsschiene (18) trägt.

5. Bearbeitungsmaschine nach Anspruch 4, **dadurch gekennzeichnet, daß** die insbesondere seitlich der Mittellinie zwischen den beiden Führungsschienen (18, 19) für den ersten Schlitten (21) angeordnete asymmetrische Erweiterung (20) des Maschinenständers (10) auch einen Spindelantrieb (23, 24) für den ersten Schlitten (21) trägt.

6. Bearbeitungsmaschine nach einem der vorhergehenden Ansprüche, **dadurch gekennzeichnet, daß** die vertikalen Führungsschienen (32) für den Bearbeitungstisch (33) an der die längere Führungsschiene (18) tragenden Seitenwandung (12) angeordnet sind.

7. Bearbeitungsmaschine nach einem der vorhergehenden Ansprüche, **dadurch gekennzeichnet, daß** der Bearbeitungsbereich (15) unterhalb des Bearbeitungstisches (33) eine Schrägfläche oder Schrägwandung (40) besitzt, die sich von der nicht mit der vertikalen Führungsschiene (32) versehenen Seitenwandung (13) aus schräg nach unten zur gegenüberliegenden Seitenwandung (12) hin erstreckt, wobei diese Schrägwandung (40) als Zuführungsfläche für bei der Bearbeitung anfallenden Materialabtrag sowie Kühl- und Schmiermittel zu einem unterhalb des Bearbeitungsbereichs (15) angeordneten Abführungskanal (42) ausgebildet ist, der sich vorzugsweise zwischen den Seitenwandungen (12, 13) zum hinteren Endbereich des Maschinenständers (10) erstreckt.

8. Bearbeitungsmaschine nach Anspruch 7, **dadurch gekennzeichnet, daß** der Bearbeitungstisch (33 ) unterhalb einer Bearbeitungsplatte (34) eine an die des auf einer Seite durch die Schrägwandung (40) begrenzten unteren Teils des Bearbeitungsbereichs (15) angepaßte Gestalt besitzt.

9. Bearbeitungsmaschine nach einem der vorhergehenden Ansprüche, **dadurch gekennzeichnet, daß** ein ständerfester Antriebsmotor (37) für den Bearbeitungstisch (33) wenigstens in der untersten Stellung desselben in einen Hohlraum (39) dieses Bearbeitungstisches (33) eingreift, wobei der Antriebsmotor (37) vorzugsweise eine Hubspindel (38) antreibt.

10. Bearbeitungsmaschine nach einem der vorhergehenden Ansprüche, **dadurch gekennzeichnet, daß** ein den Bearbeitungsbereich (15) nach einer dritten, von einer Bedienungsperson abgewandten Seite hin begrenzender, die beiden Seitenwandungen (12, 13) verbindender Ständerbereich (16) vorgesehen ist, der vorzugsweise ein Werkzeugmagazin (17) enthält.

11. Bearbeitungsmaschine nach Anspruch 10, **dadurch gekennzeichnet, daß** der die Seitenwandungen (12, 13) verbindende Ständerbereich (16) oder eine Querwandung (14) zu diesem Ständerbereich (16) eine Zugriffsöffnung (45) zum Werkzeugmagazin (17) vom Bearbeitungsbereich aus besitzt, die vorzugsweise nach oben hin offen ist.

12. Bearbeitungsmaschine nach Anspruch 10 oder 11, **dadurch gekennzeichnet, daß** das insbesondere als Trommelmagazin ausgebildete Werkzeugmagazin (17) im wesentlichen mittig zwischen den beiden Führungsschienen (18, 19) oder Seitenwandungen (12, 13) angeordnet ist.

13. Bearbeitungsmaschine nach einem der Ansprüche 10 bis 12, **dadurch gekennzeichnet, daß** das Werkzeugmagazin (17) an der Rückseite des Maschinenständers (10) wenigstens teilweise offen oder lösbar abdeckbar ist.

14. Bearbeitungsmaschine nach einem der vorhergehenden Ansprüche, **dadurch gekennzeichnet, daß** die vertikalen Führungsschienen (32) versenkt in der Seitenwandung (12) angeorc net sind, insbesondere derart, daß auch der Bearbeitungstisch (33) in einen vertikalen Führungsschacht oder Vertikalkanal (36) in dieser Seitenwandung (12) eingreift.

## Claims

1. Machining centre, in particular drilling and/or milling machine, with a machine column (10) on which a motor-driven first slide (21) guided on guide rails (18, 19) may be driven in a first horizontal direction of movement, while a motor-driven second slide (26) is guided on the first slide (21) in a second horizontal direction of movement at right-angles to the first direction of movement, with a machining head (31) mounted on the second slide (26) and having a drive mechanism (30) for one or more rotating tools, and with a machining table (33), in a machining zone (15) below the machining head (31), which is slidably guided by a motor on vertical guide rails (32) to execute vertical machining movements during the machining of workpieces by the machining head (31), **characterised in that** the machining zone (15) is bounded at least partly at the side by two side walls (12, 13) of the machine column (10), which run parallel to the first horizontal direction of movement, and that the vertical guide rails (32) for the machining table (33) are arranged on one of the side walls (12).

2. Machining centre according to claim 1, **characterised in that** two horizontal guide rails (18,19) for the first slide (21) run at least partly on and parallel to the side walls (12, 13).

3. Machining centre according to claim 2, **characterised in that** one of the horizontal guide rails (18) is longer than the other (19) and the first slide (21) has a 3-point guide, wherein two guide elements (22) spaced apart are guided on the longer (18), and one guide element (22) on the shorter guide rail (19).

4. Machining centre according to claim 2 or 3, **characterised in that** the machine column (10), in an extension of the side wall (12) supporting the longer guide rail (18), has an asymmetric rear extension (20) which supports the rear section of this guide rail (18).

5. Machining centre according to claim 4, **characterised in that** the asymmetric extension (20) of the machine column (10) located in particular to the side of the centre line between the two guide rails (18, 19) for the first slide (21) also carries a spindle drive (23, 24) for the first slide (21).

6. Machining centre according to any of the preceding claims, **characterised in that** the vertical guide rails (32) for the machining table (33) are fitted to the side wall (12) carrying the longer guide rail (18).

7. Machining centre according to any of the preceding claims, **characterised in that** the machining zone (15) below the machining table (33) has an inclined surface or inclined wall (40) which extends downwards from the side wall (13) not provided with the vertical guide rail (32) to the opposite side wall (12), wherein this inclined wall (40) is designed as a surface to feed abraded material produced during machining, together with coolant and lubricant, to a disposal channel (42) located beneath the machining zone (15) and which extends preferably between the side walls (12, 13) to the rear end section of the machine column (10).

8. Machining centre according to claim 7, **characterised in that** below a machining plate (34), the machining table (33) has a shape matched to that of the lower section of the machining zone (15) which is bounded on one side by the inclined wall (40).

9. Machining centre according to any of the preceding claims, **characterised in that** a drive motor (37) for the machining table (33), fixed to the column, engages at least in the lowest position of the machining table (33) in a cavity (39) of the latter, while the drive motor (37) preferably drives an elevating screw (38).

10. Machining centre according to any of the preceding claims, **characterised in that** there is provided a column area (16), preferably containing a tool magazine (17), which bounds the machining zone (15) towards a third side facing away from an operator, and connects the two side walls (12, 13).

11. Machining centre according to claim 10, **characterised in that** the column area (16) connecting the side walls (12, 13) or a transverse wall (14) to this column area (16) has an access opening (45) to the tool magazine (17) from the machining zone, preferably open at the top.

12. Machining centre according to claim 10 or 11, **characterised in that** the tool magazine (17), in particular in the form of a drum magazine, is substantially mounted centrally between the two guide rails (18, 19) or side walls (12, 13).

13. Machining centre according to any of claims 10 to 12, **characterised in that** the tool magazine (17) is at least partly open or may be provided with a releasable cover at the rear of the machine column (10).

14. Machining centre according to any of the preceding claims, **characterised in that** the vertical guide rails (32) are recessed in the side wall (12), in particular in such a way that the machining table (33) also engages in a vertical guide shaft or vertical channel (36) in this side wall (12).

## Revendications

1. Machine d'usinage, en particulier perceuse et/ou fraiseuse, avec un bâti de machine (10) sur lequel un premier chariot (21) guidé sur des rails de guidage (18, 19) et entraîné par moteur est mobile dans une premier direction de déplacement horizontale, un deuxième chariot (26) entraîné par moteur étant guidé sur le premier chariot (21) dans une deuxième direction de déplacement horizontale perpendiculaire à la première direction de déplacement, avec une tête d' usinage (31) montée sur le deuxième chariot (26) présentant un dispositif d'entraînement (30) pour au moins un outil rotatif, et avec une table d'usinage (33) dans une zone d'usinage (15) au-dessous de la tête d'usinage (31), qui est guidée de manière mobile et motorisée sur des rails de guidage verticaux (32) afin d'exécuter des déplacements d'usinage verticaux lors de l'usinage de pièces par la tête d'usinage (31), **caractérisée en ce que** la zone d'usinage (15) est délimitée latéralement au moins partiellement par deux parois verticales (12, 13) du bâti de machine (10) qui s'étendent parallèlement à la première direction de déplacement horizontale, et **en ce que** les rails de guidage verticaux (32) pour la table d'usinage (33) sont placés sur l'une des parois verticales (12).

2. Machine d'usinage selon la revendication 1, **caractérisée en ce que** deux rails de guidage horizontaux (18, 19) pour le premier chariot (21) s'étendent au moins partiellement sur les parois latérales (12, 13) et parallèlement à celles-ci.

3. Machine d'usinage selon la revendication 2, **caractérisée en ce qu'**un des rails de guidage horizontaux (18) est plus long que l'autre (19) et le premier chariot (21) possède un guidage à trois points, deux éléments de guidage (22) espacés l'un de l'autre étant guidés sur le plus long rail de guidage (18) et un élément de guidage (22) sur le plus court rail de guidage (19).

4. Machine d'usinage selon la revendication 2 ou 3, **caractérisée en ce que** le bâti de machine (10) possède dans le prolongement de la paroi latérale (20) portant le plus long rail de guidage (18) un élargissement arrière asymétrique (20) qui porte la partie arrière de ce rail de guidage (18).

5. Machine d'usinage selon la revendication 4, **caractérisée en ce que** l'élargissement asymétrique (20) du bâti de machine (10) placé en particulier latéralement de la ligne médiane entre les deux rails de guidage (18, 19) pour le premier chariot (21) porte également un entraînement à broche (23, 24) pour le premier chariot (21).

6. Machine d'usinage selon l'une des revendications précédentes, **caractérisée en ce que** les rails de guidage verticaux (32) pour la table d'usinage (33) sont placés sur la paroi latérale (12) portant le plus long rail de guidage (18).

7. Machine d'usinage selon l'une des revendications précédentes, **caractérisée en ce que** la zone d'usinage (15) possède au-dessous de la table d'usinage (33) une surface inclinée ou paroi inclinée (40) qui, depuis la paroi verticale (13) dépourvue de rail de guidage vertical (32), s'étend à l'oblique vers le bas en direction de la paroi latérale (12) opposée, cette paroi inclinée (40) étant conformée en surface de transport pour la matière enlevée lors de l'usinage, ainsi que pour l'agent de lubrification et de refroidissement, en direction d'un canal d'évacuation (42) placé sous la table d'usinage (15), qui s'étend de préférence entre les parois latérales (12, 13) en direction de la partie d'extrémité arrière du bâti de machine (10).

8. Machine d'usinage selon la revendication 7, **caractérisée en ce que** la table d'usinage (33) possède sous une plaque d'usinage (34) une forme adaptée à la partie inférieure de la zone d'usinage (15) délimitée d'un côté par la paroi inclinée (40).

9. Machine d'usinage selon l'une des revendications précédentes, **caractérisée en ce qu'**un moteur d'entraînement (37) solidaire du bâti pour la table d'usinage (33) s'engage au moins dans la position la plus basse de celle-ci dans une cavité (39) de cette table d'usinage (33), le moteur d'entraînement (37) entraînant de préférence une broche de levage (38).

10. Machine d'usinage selon l'une des revendications précédentes, **caractérisée en ce qu'**il est prévu une zone de bâti (16) reliant les deux parois latérales (12, 13), délimitant la zone d'usinage (15) vers un troisième côté opposé à un opérateur, et qui contient de préférence un magasin à outils (17).

11. Machine d'usinage selon la revendication 10, **caractérisée en ce que** la partie de bâti (16) reliant les parois latérales (12, 13) ou une paroi transversale (14) par rapport à cette partie de bâti (16) possède une ouverture d'accès (45) au magasin d'outils (17) depuis la zone d'usinage, qui est de préférence ouverte vers le haut.

12. Machine d'usinage selon la revendication 10 ou 11, **caractérisée en ce que** la magasin à outils (17) conformé en particulier en magasin à tambour est placé pour l'essentiel au centre entre les deux rails de guidage (18, 19) ou parois latérales (12, 13).

13. Machine d'usinage selon l'une des revendications 10 à 12, **caractérisée en ce que** le magasin d'outils (17) est au moins partiellement ouvert ou refermable de manière amovible sur la face arrière du bâti de machine (10).

14. Machine d'usinage selon l'une des revendications précédentes, **caractérisée en ce que** les rails de guidage verticaux (32) sont placés en renfoncement dans la paroi latérale (12), en particulier de telle manière qu'également la table d'usinage (33) s'engage dans une gaine verticale de guidage ou un canal vertical (36) dans cette paroi latérale (12).
